# EUROPÄISCHE PATENTANMELDUNG

(11) **EP 1 958 727 A1**
(43) Veröffentlichungstag der Anmeldung: **20.08.2008**
(21) Anmeldenummer: 08100166.1
(22) Anmeldetag: 07.01.2008
(51) Int. Cl.: B23K 26/08, B23K 26/16

(54) **Verfahren und Vorrichtung zum Bearbeiten von Werkstücken mit einer energiereichen Strahlung**

(30) Priorität: 15.02.2007 DE 102007007508
(71) Anmelder: ROBERT BOSCH GMBH, 70442 Stuttgart (DE)
(72) Erfinder: Birnesser, Andreas Josef, 77836, Rheinmuenster (DE); Kittel, Sonja, 70372, Stuttgart (DE)

(57) **Zusammenfassung**

Die Erfindung betrifft ein Verfahren und eine Vorrichtung zum Bearbeiten von Werkstücken mittels einer von einer Strahlungsquelle erzeugten energiereichen Strahlung. Erfindungsgemäß ist vorgesehen, dass die Rotationsgeschwindigkeit des rotierbar angeordneten Werkstücks (1) so hoch gewählt wird, dass die entstehende Schmelze (13) durch die rotationsbedingt wirkende Fließkraft zumindest teilweise aus dem Aufschmelzbereich (12) ausgetrieben wird.

## Beschreibung

### Stand der Technik

Die Erfindung betrifft ein Verfahren zum Bearbeiten von Werkstücken gemäß dem Oberbegriff des Anspruchs 1 sowie eine Vorrichtung zur Durchführung des Verfahrens gemäß dem Oberbegriff des Anspruchs 8.

Bei der Materialbearbeitung mittels energiereicher Strahlung, wie beispielsweise Laserstrahlung, wird die Strahlung auf das zu bearbeitende Material fokussiert. Die Absorption der Strahlung führt zum Aufheizen, Aufschmelzen und/oder zum Verdampfen des Materials. Mit Hilfe dieses Bearbeitungsprinzips sind verschiedene Bearbeitungsverfahren, wie beispielsweise das Laserabtragen oder das Laserschneiden möglich.

Beim Laserabtragen wird durch den entstehenden Überdruck das Material an der Wechselwirkungszone entfernt. Um das Material bis zur Verdampfung zu erhitzen, sind für den Prozess hohe Strahlungsintensitäten von mehr als 10⁶ W/mm² erforderlich. Je nach Wahl der Parameter, wie Pulsleistung und Pulsdauer der Strahlung und auch in Abhängigkeit des Materials des Werkstücks (beispielsweise Dichte und Schmelzviskosität) verbleiben jedoch Schmelzereste in der Wechselwirkungszone (Aufschmelzbereich), die nach der Erstarrung zu unerwünschten Graten und Unregelmäßigkeiten in der Oberfläche führen. Zur Austreibung der Schmelze aus dem Aufschmelzbereich werden daher Arbeitsgase eingesetzt, die die unerwünschte Restschmelze aus der Aufschmelzzone fördern, das heißt austreiben sollen. Je nach Tiefe der erzeugten Bohrung oder Nut und je nach geforderter Bearbeitungsqualität stellt die Schmelzeaustreibung ein mehr oder weniger großes Problem dar.

Das Laserschneiden ist ein thermisches Trennverfahren und eignet sich zum Trennen von metallischen und nicht-metallischen Werkstoffen. Dabei wird zwischen drei Schneidverfahren unterschieden. Beim sogenannten Schmelzschneiden wird das zu schneidende Werkstück in der Schnittzone mittels eines Lasers zum Schmelzen gebracht und mit Hilfe eines Austreibungsgases unter hohem Druck ausgeblasen. Beim sogenannten Brennschneiden wird als Austreibungsgas Sauerstoff eingesetzt, mittels dem aufgrund eines resultierenden Oxidationsprozesses große Eindringtiefen des Schnittes in das Werkstück erreicht werden können. Durch die Oxidationsvorgang beim Laserbrennschneiden entstehen an der Schnittkante des Werkstoffes Oxidreste, welche bei der weiteren Verarbeitung zu Problemen führen. Beim sogenannten Sublimierschneiden wird der Werkstoff nicht aufgeschmolzen, sondern verdampft. Hierzu sind jedoch hohe Anforderungen an die Strahlungsquelle, wie hohe Repetitionsraten oder ultrakurze Impulse notwendig, um eine vollständige Verdampfung in der Schneidzone zu erreichen.

Aus der DE 10 2005 002 670 A1 ist es bekannt, das zu bearbeitende Werkstück relativ zu einer Laserstrahlungsquelle zu rotieren, wodurch beispielsweise Spiralformen durch die Laserbearbeitung am Werkstück realisierbar sind. Bei dem bekannten Verfahren ist es zwingend notwendig zur Austreibung der gebildeten Schmelze Austreibungsgase einzusetzen.
Bei den beschriebenen Bearbeitungsverfahren sind große Abtragungsvolumina bzw. groß zu schneidende Materialdecken mit hohen Prozessdauern verbunden, so dass die bekannten Bearbeitungsverfahren für diese Zwecke nicht wirtschaftlich einsetzbar sind.

### Offenbarung der Erfindung

### Technische Aufgabe

Der Erfindung liegt die Aufgabe zugrunde, ein Bearbeitungsverfahren sowie eine Vorrichtung zur Durchführung des Verfahrens anzugeben, bei denen die beim Bearbeitungsprozess entstehende Schmelze auf einfache Weise, vorzugsweise mindestens nahezu rückstandsfrei, aus dem Aufschmelzbereich austreibbar ist.

### Technische Lösung

Hinsichtlich des Verfahrens wird diese Aufgabe mit den Merkmalen des Anspruchs 1 und hinsichtlich der Vorrichtung mit den Merkmalen des Anspruchs 8 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen.

Der Erfindung liegt der Gedanke zugrunde, das Werkstück rotierend anzuordnen, wobei die Rotationsgeschwindigkeit so zu wählen ist, dass die auf die im Aufschmelzbereich durch die Strahlungsbeaufschlagung entstehende Schmelze wirkenden Fließkräfte so groß sind, dass die Schmelze zumindest teilweise, bevorzugt zumindest näherungsweise vollständig aus dem Aufschmelzbereich ausgetrieben wird. Auf im Stand der Technik zwingend notwendige Austreibungsgase kann dabei, muss jedoch nicht, aufgrund der Erfindung verzichtet werden.

An die Geometrie des Werkstücks sind zur erfolgreichen Anwendung des erfindungsgemäßen Verfahrens keine besonderen Anforderungen zu stellen. Die Geometrie des Werkstücks muss es lediglich zulassen, dass durch die auftretenden Fliehkräfte ein Austreiben der Schmelze möglich ist. Das Werkstück kann dabei rotationssymmetrisch aber auch asymmetrisch zur Rotationsachse ausgebildet sein. Je nach Wahl der Rotationsgeschwindigkeit ist es ferner möglich, die Schmelze definiert zu verformen und somit komplexe Werkstückgeometrien herzustellen. Das erfindungsgemäße Verfahren und die erfindungsgemäße Vorrichtung eignen sich beispielsweise zur Bearbeitung bzw. Herstellung von Profilen, Nuten und Schnitten. Bei Bedarf können mehrere Strahlungsquellen, insbesondere Laserstrahlungsquellen und/oder Elektronenstrahlungsquellen gleichzeitig zur Bearbeitung eines rotierenden Werkstücks eingesetzt werden. Von Vorteil ist es, der mindestens einen Strahlungsquelle eine Optik zur Fokussierung des erzeugten Strahls im Aufschmelzbereich zuzuordnen, wobei bevorzugt die Optik derart ansteuerbar ist, dass der Fokus des erzeugten Strahls an die Bearbeitungssituation bzw. den Bearbeitungsstand (-grad) anpassbar ist.

Ein weiterer Vorteil des erfindungsgemäßen Verfahrens und der erfindungsgemäßen Vorrichtung besteht darin, dass relativ geringe Anforderungen an die Strahlenquellentechnik bestehen. Es können beispielsweise konventionelle gepulste oder auch CW-Laser eingesetzt werden. Hohe Repetitionsraten oder ultrakurze Pulse müssen nicht realisiert werden, da es für das erfindungsgemäße Verfahren nicht notwendig ist, das der Werkstoff vollständig verdampft. Hieraus resultiert eine höhere Prozesseffizienz, da das Abtragen von flüssigem Material (Schmelze) weniger Energie erfordert als die Verdampfung des Werkstoffes. Beim Abtragen mit einer gepulsten Strahlungsquelle kann beispielsweise mit einem einzigen Puls eine vollständige Umfangsnut erzeugt werden. Das erfindungsgemäße Verfahren und die erfindungsgemäße Vorrichtung ermöglichen weiterhin die Ausbildung neuer Nutformen, die insbesondere abhängig von der verwendeten Strahlungsquelle und den eingestellten Parameters sind.

In Weiterbildung der Erfindung ist mit Vorteil vorgesehen, dass die Schmelze durch Abschleudern von dem Werkstück, insbesondere in tangentialer Richtung relativ zu dem Werkstück aus dem Aufschmelzbereich ausgetrieben wird. Hierzu muss die Rotationsgeschwindigkeit zur Erzielung entsprechend großer Fliehkräfte entsprechend hoch gewählt werden. Bevorzugt ist dabei eine der Strahlungsquelle zugeordnete Optik derart, insbesondere schräg, anzuordnen, dass diese nicht von abgeschleuderten Schmelzeresten beschädigt werden kann.

Von besonderem Vorteil ist es, wenn die Strahlungsquelle um eine zweite Rotationsachse rotierbar angeordnet ist, wobei bevorzugt die zweite Rotationsachse identisch mit der ersten Rotationsachse ist. Von Vorteil ist es dabei, wenn die Strahlungsquelle zumindest zeitweise mit derselben Rotationsgeschwindigkeit rotiert, wie das zu bearbeitende Werkstück, also hinsichtlich der Rotationsbewegung eine Relativbewegung zwischen dem Werkstück und der Strahlungsquelle unterbunden wird. Hierdurch ist es beispielsweise möglich, mittels der Strahlungsquelle (gerade) Bohrungen in das Werkstück einzubringen. Mit Vorteil wird die Strahlungsquelle zusammen mit dem Werkstück mittels einer Werkstückrotationseinrichtung um eine gemeinsame Drehachse rotiert. Alternativ dazu ist es denkbar, eine separate Rotationseinrichtung für die Strahlungsquelle vorzusehen. Aufgrund der i.d.R. großen Abmessung der Strahlungsquelle kann es für viele Anwendung von Vorteil sein, nicht die gesamte Strahlungsquelle, sondern lediglich den von der Strahlungsquelle erzeugten Bearbeitungsspot (Strahlungsfokus) rotierbar anzuordnen. Hierzu kann beispielsweise ein Scanner in Kombination mit einem Kegelspiegel eingesetzt werden.

Alternativ oder bevorzugt zusätzlich zu einer rotierenden Anordnung der Strahlungsquelle ist die Strahlungsquelle, oder der Bearbeitungsspot, insbesondere mittels einer Verstelleinrichtung relativ zu dem Werkstück verstellbar. Zusätzlich oder alternativ kann auch das Werkstück relativ zur Strahlungsquelle bzw. zum Bearbeitungsspot verstellbar angeordnet sein. Bevorzugt ist die Verstelleinrichtung derart ausgebildet, dass eine Verstellung der (vorzugsweise rotierenden) Strahlungsquelle relativ zu dem Werkstück parallel zur Rotationsachse (X-Achse) möglich ist. Zusätzlich oder alternativ ist es von Vorteil die Strahlungsquelle relativ zu dem Werkstück in radialer Richtung, also entlang einer X-Achse zu bewegen. Zusätzlich ist es von Vorteil, wenn die Strahlungsquelle zusätzlich oder alternativ quer, das heißt entlang einer Y-Achse relativ zu der Rotationsachse des Werkstücks verstellbar ist. Bei einer rotierenden Anordnung der Strahlungsquelle kann durch eine Anpassung der Rotationsgeschwindigkeit der Strahlungsquelle (bei Verwendung einer separaten Rotationseinrichtung) eine relative Rotationsbewegung zwischen der Strahlungsquelle und dem Werkstück realisiert werden. Zusätzlich oder alternativ ist es denkbar, die Verstelleinrichtung derart auszubilden, dass die (insbesondere zusammen mit dem Werkstück rotierende) Strahlungsquelle auf einer (Teil-) Kreisbahn um das Werkstück verfahrbar ist. Weiter von Vorteil ist es, die Strahlungsquelle in radialer Richtung (Z-Achse) verstellbar anzuordnen. Durch die Realisierung mindestens einer Relativverstellbarkeit zwischen Strahlungsquelle und Werkstück ist es möglich, komplexe Nutgeometrien oder Schneidgeometrien zu realisieren. Es ist aufgrund der beschriebenen Ausgestaltung des Verfahrens und der Vorrichtung möglich, nicht nur lineare Konturen innerhalb einer Ebene zu realisieren, sondern es können auch spezielle Nutformen verwirklicht werden, wie beispielsweise Spiral- oder Sinusformen. Bevorzugt ist dabei eine Strahlungsoptik bzw. der Strahlungsfokus an die Abtragungsgeometrie zur Optimierung des Abtragungsergebnisses anpassbar. Das beschriebene Verfahren und die beschriebene Vorrichtung ermöglichen es zusätzlich beispielsweise Gewinde in das Werkstück einzuformen.

Zur Realisierung großer Abtragungsvolumina bzw. großer Schnitttiefen ist es von Vorteil, wenn ein Bearbeitungsvorgang mehrfach wiederholt wird, insbesondere mittels der Strahlungsquelle mehrfach dieselbe Bearbeitungsbahn (Relativbewegungsbahn) abgefahren wird. Bei einem derartigen, schichtweisen Materialabtrag kann auf einen im Stand der Technik beim Laserschneiden notwendigen, starke Rückreflexe und Materialspritzer verursachenden, Durchstoßvorgang mittels des energiereichen Strahls verzichtet werden. Hierdurch wird die Gefahr einer Beschädigung der Strahlungsoptik miniert. Aufgrund der schichtweisen Bearbeitung können ferner Strahlungsquellen mit niedriger Leistung eingesetzt werden, was zu einer Herabsetzung der thermischen Aufheizung des Materials an den Schnittkanten führt. Die hohe thermische Aufheizung bei herkömmlichen Verfahren erschwert die Weiterverarbeitung des geschnittenen Zwischen- und/oder Endproduktes. Da beim beschriebenen Verfahren der Aufheizvorgang zeitlich kürzer ist und auch nur geringe Tiefen im Material erreicht werden müssen, werden die im Stand der Technik auftretenden extrem hohen Temperaturengradienten während des Schneidvorgangs vermieden.

In Ausgestaltung der Erfindung ist mit Vorteil vorgesehen, dass zusätzlich zur schnellen rotierenden Anordnung des Werkstücks zur noch weiter verbesserten Austreibung, insbesondere Abschleuderung der Schmelze ein Austreibungsgas eingesetzt wird. Bei der Verwendung von Sauerstoff können dabei extrem große Eindringtiefen realisiert werden. Ferner können durch geeignete Austreibungsgase die Oberflächenspannung und/oder die Viskosität der Schmelze positiv beeinflusst werden.

### Kurze Beschreibung der Zeichnungen

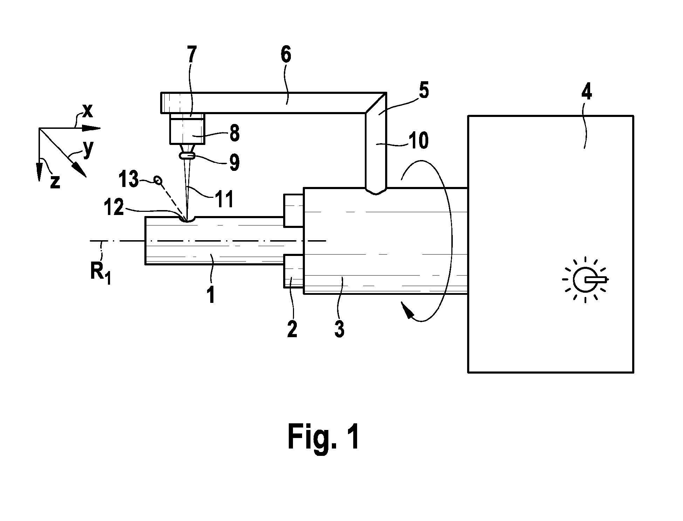

Weitere Vorteile, Merkmale und Einzelheiten der Erfindung ergeben sich aus der nachfolgenden Beschreibung eines bevorzugten Ausführungsbeispiels sowie anhand der Zeichnung. Diese zeigt in der einzigen Figur den schematischen Aufbau einer möglichen Vorrichtung zur Durchführung eines Bearbeitungsverfahrens von Werkstücken unter Einsatz von Laserstrahlung.

### Ausführungsform der Erfindung

In dem beschriebenen Ausführungsbeispiel wird ein Werkstück 1 mit Hilfe von Laserstrahlung bearbeitet. Die Wahl von Laserstrahlung als energiereiche Strahlung ist lediglich beispielhaft und nicht einschränkend zu verstehen. Alternativ können andere energiereiche Strahlungen, wie beispielsweise Elektronenstrahlung, eingesetzt werden.

Das in dem gezeigten Ausführungsbeispiel als Vollmaterialzylinder ausgebildete, rotationssymmetrische Werkstück 1 ist mit Hilfe einer Fixiereinrichtung 2 (Spannfutter) an einer rotierbaren Welle 3 fixiert. Die Welle 3 wird dabei rotierend von einem geschwindigkeitsregelbaren Antriebsmotor um eine erste Rotationsachse R₁ in Rotation versetzt.

An der rotierbaren Welle 3 ist ein L-förmiger Haltearm 5 drehfest fixiert, dessen in der Zeichnungsebene oberer Schenkel 6 sich parallel zur Rotationsachse R₁ erstreckt. Relativ zu dem oberen Schenkel 6 ist eine als Verstellschlitten insbesondere Kreuzschlitten ausgebildete Verstelleinrichtung 7 verstellbar. Die Verstelleinrichtung 7 trägt eine als Laserstrahlungsquelle ausgebildete Strahlungsquelle 8 mit einer Fokussieroptik 9. Mittels der Verstelleinrichtung 7 ist die Strahlungsquelle 8 relativ zu dem Werkstück 1 entlang einer X-Achse (parallel zur Rotationsachse R₁) sowie entlang einer Y-Achse (quer zur Rotationsachse R₁) verstellbar. Die Verstelleinrichtung 7 ist derart ausgebildet, dass die Strahlungsquelle 8 auch entlang einer Z-Achse (in radialer Richtung relativ zu der Rotationsachse R₁) verstellbar ist. Diese Verstellbarkeit kann auch dadurch realisiert werden, dass ein radial zur Rotationsachse R₁ verlaufender zweiter Schenkel 10 des Haltearms 5 in radialer Richtung ausfahrbar ausgebildet ist.

Zusätzlich ist es denkbar, dass die Verstelleinrichtung 7 eine Verstellung der Strahlungsquelle 8 auf einer nicht gezeigten Teilkreisführung um die Rotationsachse R₁ zulässt. Alternativ dazu ist es realisierbar, zur Rotation der Strahlungsquelle 8 um die Rotationsachse R₁ des Werkstücks 1 oder um eine andere, bevorzugt zur Rotationsachse R₁ parallele Achse eine nicht gezeigte separate Rotationseinrichtung vorzusehen.

Der von der Strahlungsquelle 8 erzeugte Laserstrahl 11 wird mittels der Fokussieroptik 9 auf das Werkstück 1, insbesondere auf einen Aufschmelzbereich 12 (Wechselwirkungsbereich) fokussiert, so dass Werkstückmaterial aufgeschmolzen wird. Durch eine entsprechend schnelle Rotation des Werkstücks 1 mittels des Antriebsmotors 4 um die Rotationsachse R1 wird dabei entstehende Schmelze 13 in etwa tangential relativ zu dem sich drehenden Werkstück 1 von dem Werkstück 1 nach außen abgeschleudert. Gegebenenfalls können zusätzlich die Austreibung der Schmelze 13 unterstützende Arbeitsgase in den Aufschmelzbereich 12 eingeblasen werden.

Durch geeignete Verstellung der Strahlungsquelle 8 und gegebenenfalls Einstellung der Fokussieroptik 9 können (nahezu) beliebig komplexe Geometrien in das Werkstück 1 eingeformt werden, oder das Werkstück kann entlang komplexer Konturen geschnitten werden.

## Patentansprüche

1. Verfahren zum Bearbeiten von Werkstücken mit einer von einer Strahlungsquelle (8) erzeugten energiereichen Strahlung, insbesondere Laserstrahlung (11) oder Elektronenstrahlung, wobei das mit der Strahlung beaufschlagte Werkstück (1) um eine erste Rotationsachse (R₁) rotiert und aufgrund der Strahlungsbeaufschlagung in einem Aufschmelzbereich (12) am Werkstück (1) eine Schmelze (13) gebildet wird,
**dadurch gekennzeichnet,**
**dass** die Rotationsgeschwindigkeit so hoch gewählt wird, dass die Schmelze (13) durch die rotationsbedingt wirkende Fliehkraft zumindest teilweise aus dem Aufschmelzbereich (12) ausgetrieben wird.

2. Verfahren nach Anspruch 1,
**dadurch gekennzeichnet,**
**dass** die Schmelze (13) in tangentialer Richtung relativ zu dem Werkstück (1) von dem Werkstück (1) abgeschleudert wird.

3. Verfahren nach einem der Ansprüche 1 oder 2,
**dadurch gekennzeichnet,**
**dass** die Strahlungsquelle (8) und/oder ein Bearbeitungsspot um eine zweite Rotationsachse rotierend angeordnet ist.

4. Verfahren nach Anspruch 3,
**dadurch gekennzeichnet,**
**dass** die erste Rotationsachse (R₁) mit der zweiten Rotationsachse zusammenfällt.

5. Verfahren nach einem der vorhergehenden Ansprüche,
**dadurch gekennzeichnet,**
**dass** die Strahlungsquelle (8) und/oder der Bearbeitungsspot relativ zu dem Werkstück (1) parallel zur ersten Rotationsachse (R₁) und/oder radial zur ersten Rotationsachse (R₁) und/oder quer zur ersten Rotationsachse (R₁) und/oder in Umfangsrichtung um die erste Rotationsachse (R₁) bewegt werden/wird.

6. Verfahren nach einem der vorhergehenden Ansprüche,
**dadurch gekennzeichnet,**
**dass** ein Bearbeitungsvorgang mehrfach wiederholt wird.

7. Verfahren nach einem der vorhergehenden Ansprüche,
**dadurch gekennzeichnet,**
**dass** zur Unterstützung der Schmelzeaustreibung ein Austreibungsgas eingesetzt wird.

8. Vorrichtung zum Bearbeiten von Werkstücken mittels eines Verfahrens gemäß einem der vorhergehenden Ansprüche, mit einer Strahlungsquelle (8) zum Erzeugen einer energiereichen Strahlung zum Beaufschlagen des Werkstücks (1) zum Erzeugen einer Schmelze (13) in einem Aufschmelzbereich (12), und mit einer Werkstückrotationseinrichtung zur Rotation des Werkstücks (1) um eine erste Rotationsachse (R₁),
**dadurch gekennzeichnet,**
**dass** die mit der Werkstückrotationseinrichung erzielbare Rotationsgeschwindigkeit so hoch ist oder so hoch einstellbar ist, dass die Schmelze (13) durch die rotationsbedingt wirkende Fliehkraft zumindest teilweise aus dem Aufschmelzbereich (12) austreibbar ist.

9. Vorrichtung nach Anspruch 8,
**dadurch gekennzeichnet,**
**dass** die Strahlungsquelle (8) und/oder ein Bearbeitungsspot mittels der Werkstückrotationseinrichtung oder einer separaten Rotationseinrichtung rotierbar ist.

10. Vorrichtung nach einem der Ansprüche 8 oder 9,
**dadurch gekennzeichnet,**
**dass** eine Verstelleinrichtung (7) zum Verstellen der Strahlungsquelle (8) und/oder des Bearbeitungsspots relativ zu dem Werkstück (1) parallel zur ersten Rotationsachse (R₁) und/oder radial zur ersten Rotationsachse (R₁) und/oder quer zur ersten Rotationsachse (R₁) und/oder in Umfangsrichtung um die erste Rotationsachse (R₁) vorgesehen ist.
